(19) **Europäisches Patentamt / European Patent Office / Office européen des brevets**

(11) **EP 3 425 344 B1**

(12) **FASCICULE DE BREVET EUROPEEN**

(45) Date de publication et mention
de la délivrance du brevet:
**24.03.2021 Bulletin 2021/12**

(51) Int Cl.:
**G01D 5/353** *(2006.01)*    **G02B 6/293** *(2006.01)*

(21) Numéro de dépôt: **18181241.3**

(22) Date de dépôt: **02.07.2018**

(54) **CAPTEUR DE DEPLACEMENT AVEC MICRO-RÉSONATEUR EN ANNEAU SEGMENTÉ**

BEWEGUNGSSENSOR MIT MIKRORESONATOR MIT SEGMENTIERTEM RING

MOVEMENT SENSOR WITH SEGMENTED RING MICRO-RESONATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2017 FR 1756293**

(43) Date de publication de la demande:
**09.01.2019 Bulletin 2019/02**

(73) Titulaire: **Commissariat à l'énergie atomique et aux énergies alternatives**
**75015 Paris (FR)**

(72) Inventeurs:
• **TAUREL, Boris**
**38330 MONTBONNOT-SAINT-MARTIN (FR)**
• **BOUTAMI, Salim**
**38100 GRENOBLE (FR)**
• **DURAFFOURG, Laurent**
**38500 VOIRON (FR)**

(74) Mandataire: **Brevalex**
**56, Boulevard de l'Embouchure**
**B.P. 27519**
**31075 Toulouse Cedex 2 (FR)**

(56) Documents cités:
**US-A1- 2009 220 184**    **US-A1- 2015 168 441**
**US-A1- 2017 146 738**

• **SIDDHARTH TALLUR ET AL: "A Monolithic Radiation-Pressure Driven, Low Phase Noise Silicon Nitride Opto-Mechanical Oscillator", ARXIV.ORG, CORNELL UNIVERSITY LIBRARY, 201 OLIN LIBRARY CORNELL UNIVERSITY ITHACA, NY 14853, 15 septembre 2011 (2011-09-15), XP080527739, DOI: 10.1364/OE.19.024522**
• **DONG B ET AL: "An on-chip opto-mechanical accelerometer", MICRO ELECTRO MECHANICAL SYSTEMS (MEMS), 2013 IEEE 26TH INTERNATIONAL CONFERENCE ON, IEEE, 20 janvier 2013 (2013-01-20), pages 641-644, XP032339318, DOI: 10.1109/MEMSYS.2013.6474323 ISBN: 978-1-4673-5654-1**

## Description

### DOMAINE TECHNIQUE

L'invention concerne le domaine des micro-résonateurs à guide d'onde, et leur utilisation pour détecter, voire mesurer, une déformation du micro-résonateur ou un déplacement dans le champ proche de ce micro-résonateur.

### ÉTAT DE LA TECHNIQUE ANTÉRIEURE

L'article « *Optical racetrack resonator transduction of nanomechanical cantilevers* », par V.T.K. Sauer & al., Nanotechnology, vol. 25 (2014), décrit la mesure du déplacement d'une nano-poutre, à proximité d'un micro-résonateur à guide d'onde.

Le micro-résonateur à guide d'onde est constitué d'un guide d'onde courbé en forme d'anneau, nommé micro-résonateur en anneau.

Le micro-résonateur en anneau ne comporte pas de gaine. C'est le milieu environnant qui fait office de gaine.

Ce micro-résonateur est couplé à un guide d'onde d'injection et extraction, par couplage évanescent.

Le couplage évanescent correspond à une interaction entre un mode guidé du guide d'onde d'injection et extraction, et un mode guidé du micro-résonateur, ce qui aboutit à un transfert d'énergie entre ces deux modes.

Ce transfert d'énergie est maximal aux longueurs d'onde de résonance du micro-résonateur. Une longueur d'onde de résonance du micro-résonateur est une longueur d'onde pour laquelle le déphasage apporté par un tour dans l'anneau est un multiple de $2\pi$.

En fonctionnement, un faisceau lumineux, dit faisceau d'analyse, est envoyé en entrée du guide d'onde d'injection et extraction. Une partie du faisceau laser d'analyse s'échappe vers le micro-résonateur, où elle effectue un ou plusieurs tours avant de revenir vers le guide d'onde d'injection et extraction.

La partie du faisceau d'analyse transitant dans le micro-résonateur y subit des pertes optiques, dues notamment à l'absorption par le milieu environnant.

Une nano-poutre, mobile, est disposée dans le champ proche du micro-résonateur. Elle se rapproche ou s'éloigne du micro-résonateur, en fonction de conditions externes.

La position de la nano-poutre définit localement la composition d'une gaine pour le micro-résonateur. Cette position influence donc la valeur de l'indice effectif $N_{eff}$ du mode guidé dans le micro-résonateur, et par conséquent les valeurs de longueur d'onde de résonance $\lambda$.

Ces grandeurs, indice effectif $N_{eff}$ et longueurs d'onde de résonance $\lambda$, sont en effet liées entre elles. Pour un chemin optique circulaire de rayon $R$ dans le micro-résonateur, on a notamment :

$$\lambda = \frac{N_{eff} * 2\pi R}{m} \qquad (1)$$

avec m un entier supérieur ou égal à l'unité.

L'analyse d'une variation de la lumière, en sortie du guide d'onde d'injection et extraction, permet donc de détecter et mesurer une variation de la position de la nano-poutre, relativement au micro-résonateur en anneau.

L'influence de la nano-poutre sur les longueurs d'onde de résonance reste cependant assez restreinte, ce qui limite la sensibilité du capteur.

On connaît également dans l'art antérieur la demande de brevet US 2017/0146738 qui se rapporte à un système optique avec un guide d'onde courbé, par exemple un interrupteur optique ou un capteur chimique basé sur un micro-résonateur à guide d'onde.

On connaît également la demande de brevet US 2009/0220184, qui se rapporte à un modulateur électro-optique avec un micro-résonateur à guide d'onde muni de défauts répartis de façon périodiquement.

On connaît enfin l'article « A Monolithic Radiation-Pressure Driven, Low Phase Noise Silicon Nitride Opto-Mechanical Oscillator », Siddharth Tallur & al.,arXiv.org, Cornell University Library, NY 14853, 15 septembre 2011, qui décrit un micro-résonateur en anneau auto-oscillant.

Un objectif de la présente invention est de proposer un capteur optique comportant un micro-résonateur à guide d'onde, offrant une sensibilité améliorée à la détection d'un déplacement dans le champ proche de ce micro-résonateur.

### EXPOSÉ DE L'INVENTION

Cet objectif est atteint avec un capteur optique comportant :

- un dispositif optique, lequel comprend :

  - un micro-résonateur à guide d'onde, agencé pour guider un faisceau lumineux selon un chemin optique en boucle fermée ; et
  - un guide d'onde d'injection et extraction, ou un guide d'onde d'injection et un guide d'onde d'extraction, couplé(s) optiquement au micro-résonateur pour l'injection et l'extraction dudit faisceau lumineux;

- un photo-détecteur, disposé en sortie du guide d'onde d'injection et extraction, respectivement en sortie du guide d'onde d'extraction ; et
- un dispositif d'analyse, recevant en entrée un signal fourni par le photo-détecteur, agencé pour comparer ce signal avec des données de référence, et pour en déduire une information relative à un déplacement au sein du dispositif optique.

Selon l'invention, le micro-résonateur est constitué d'une pluralité de guides d'onde élémentaires, espacés les uns des autres, et disposés les uns à la suite des autres selon un agencement en forme de boucle. Le terme « boucle » désigne ici toute ligne courbe qui se referme sur elle-même, de préférence sans croisement, par exemple un cercle (ou anneau, en considérant tout le volume occupé par les guides d'onde élémentaires), un triangle à angles arrondis, un rectangle à angles arrondis, deux demi-cercles joints par deux segments parallèles, etc.

Ainsi, un élément mobile annexe tel qu'une nano-poutre, peut se déplacer à proximité du micro-résonateur, jusqu'à se trouver entre deux guides d'onde élémentaires.

Lorsque l'élément mobile annexe se trouve entre deux guides d'onde élémentaires, il coupe le chemin optique du faisceau lumineux se propageant dans le micro-résonateur, ce qui se traduit par une forte augmentation des pertes aux longueurs d'onde de résonance du micro-résonateur et/ou une forte modification de la phase dans le micro-résonateur.

Ainsi, un déplacement de l'élément mobile entre deux positions, l'une située entre deux guides d'onde élémentaires du micro-résonateur, et l'autre pas, se traduit par une forte variation de la lumière en sortie du guide d'onde d'injection et extraction (respectivement en sortie du guide d'onde d'extraction).

La sensibilité à la détection de ce déplacement est donc fortement augmentée, en comparaison avec l'art antérieur où seule la partie évanescente d'une onde circulant dans le micro-résonateur est sensible à ce déplacement.

La constitution du micro-résonateur en guides d'onde élémentaires espacés les uns des autres présente d'autres avantages, dont certains sont détaillés ci-après.

Un micro-résonateur à guide d'onde peut, notamment lorsqu'il est agencé suspendu, se contracter et s'étendre radialement. Ce mouvement est nommé « respiration du micro-résonateur ».

L'article « A monolithic radiation-pressure driven, low phase noise silicon nitride opto-mechanical oscillator », par Siddharth Tallur & al., Optics Express, Vol. 19, No. 24, décrit un micro-résonateur en anneau, selon l'art antérieur, ainsi que son mouvement de contraction et extension radiales.

Ce mouvement modifie la longueur curviligne du micro-résonateur, ce qui se traduit par une modification de ses longueurs d'onde de résonance.

Avec un micro-résonateur selon l'invention, ce mouvement modifie également la longueur d'interstice entre deux guides d'onde élémentaires voisins, et donc l'indice effectif d'un mode guidé dans le micro-résonateur.

Or, la longueur de résonance est fonction également de cet indice effectif. En comparaison avec l'art antérieur, la variation de longueur d'onde de résonance est donc plus élevée, pour une même amplitude de mouvement radial.

On augmente ainsi une sensibilité de détection, voire de mesure, de la déformation mécanique du micro-résonateur.

Puisque le micro-résonateur est constitué de guides d'onde élémentaires distincts, il est possible de libérer le mouvement de certains d'entre eux, relativement aux autres.

Des contraintes mécaniques, qui dans l'art antérieur n'étaient pas capables de déformer le micro-résonateur, peuvent alors entraîner le déplacement d'un ou plusieurs guides d'onde élémentaires relativement aux autres. Ce déplacement se traduit par une variation d'un signal ayant transité par le micro-résonateur. On augmente ainsi la sensibilité du micro-résonateur aux contraintes mécaniques externes.

Le déplacement au sein du dispositif optique, mentionné ci-avant, désigne en particulier une déformation du micro-résonateur lui-même, et/ou le déplacement d'un élément mobile relativement au micro-résonateur.

Le dispositif d'analyse peut notamment être agencé pour comparer un spectre en longueur d'onde, fourni par le photo-détecteur à un instant courant t1, et un spectre de référence.

Le spectre de référence peut être un spectre en longueur d'onde, fourni par le photo-détecteur à un instant t0 précédant l'instant t1.

La comparaison de spectres, qui est alors mise en œuvre par le dispositif d'analyse, peut comporter une comparaison de valeurs d'intensité, en des minima locaux de ces spectres, et/ou une comparaison de valeurs de longueurs d'onde, associées à ces minima locaux.

L'invention est basée sur l'interaction entre un déplacement mécanique et un phénomène optique de résonance. Le capteur optique selon l'invention forme donc un capteur opto-mécanique, à sensibilité améliorée. L'amélioration est liée à un couplage opto-mécanique exacerbé entre le déplacement mécanique et le phénomène optique de résonance, ou en d'autres termes entre un oscillateur mécanique et un oscillateur optique.

Le capteur optique selon l'invention offre une sensibilité accrue à la mesure de déplacements nanométriques.

Le dispositif optique comprenant le micro-résonateur est décrit en détail, et protégé en tant que tel, dans la demande de brevet FR 16 57222, déposée le 27 juillet 2016. Cette demande de brevet, en revanche, ne décrit pas un capteur optique comportant un dispositif d'analyse tel que décrit ci-dessus, et n'identifie pas les avantages spécifiques à une utilisation dudit dispositif optique pour obtenir une information relative à un déplacement.

Le capteur optique selon l'invention peut comprendre en outre un élément mobile annexe, adapté à se déplacer relativement au micro-résonateur de façon à traverser partiellement ou totalement un espace libre entre deux guides d'onde élémentaires voisins.

Les guides d'onde élémentaires du micro-résonateur peuvent être suspendus au-dessus d'un substrat, et autour d'un piédestal.

De préférence, le piédestal présente une forme de cylindre, la base du cylindre présentant un diamètre compris entre 0,25 et 0,75 fois le diamètre du micro-résonateur.

Selon un mode de réalisation avantageux, les guides d'onde élémentaires du micro-résonateur sont montés solidaires d'une plaque de support, elle-même en appui sur le piédestal.

La plaque de support peut présenter une ou plusieurs tranchées, chacune de ces tranchées s'étendant depuis une région périphérique de la plaque de support, située entre deux guides d'onde élémentaires voisins, jusqu'à une région centrale de la plaque de support.

La plaque de support peut présenter au moins un couple de tranchées, chaque couple délimitant sur la plaque de support une zone dite, recevant un ou plusieurs guides d'onde élémentaires.

La plaque de support peut présenter un unique couple de tranchées.

En variante, la plaque de support peut présenter deux couples de tranchées, agencés symétriques l'un de l'autre.

Selon une autre variante, la plaque de support peut présenter une pluralité de tranchées délimitant ensemble une pluralité de zones isolées symétriques deux à deux.

Selon un autre mode de réalisation avantageux, les guides d'onde élémentaires sont suspendus autour du piédestal, par l'intermédiaire de bras qui s'étendent dans un plan parallèle au plan du micro-résonateur.

Les guides d'onde élémentaires peuvent aussi être en appui sur un substrat, sans bras de levier.

Les guides d'onde élémentaires du micro-résonateur sont avantageusement répartis de façon périodique les uns à la suite des autres, selon un pas régulier dit pas de répartition.

De préférence, le pas de répartition (P) est inférieur à :

$$\frac{\lambda}{2n_h}$$

avec $\lambda$ une longueur d'onde de résonance du micro-résonateur ; et
$n_h$ l'indice de réfraction moyen des guides d'onde élémentaires.


**BRÈVE DESCRIPTION DES DESSINS**

La présente invention sera mieux comprise à la lecture de la description d'exemples de réalisation donnés à titre purement indicatif et nullement limitatif, en faisant référence aux dessins annexés sur lesquels :

- les figures 1A et 1B illustrent de manière schématique, un premier mode de réalisation d'un capteur optique selon l'invention, respectivement selon une vue de dessus et selon une vue en coupe ;
- la figure 2 illustre des spectres de transmission obtenus à l'aide du capteur des figures 1A et 1B ;
- la figure 3 illustre de manière schématique une première variante du mode de réalisation des figures 1A et 1B ;
- la figure 4 illustre de manière schématique une deuxième variante du mode de réalisation des figures 1A et 1B ;
- la figure 5 illustre de manière schématique un deuxième mode de réalisation d'un capteur optique selon l'invention ;
- les figures 6A et 6B illustrent un comparatif de la variation de spectre de transmission obtenue à l'aide d'un capteur selon l'art antérieur, et à l'aide d'un capteur selon l'invention ;
- les figures 7A et 7B illustrent de manière schématique une première variante d'agencement suspendu du micro-résonateur selon l'invention ;
- les figures 8A et 8B illustrent de manière schématique une deuxième variante d'agencement suspendu du micro-résonateur selon l'invention ;

- les figures 9A à 9D illustrent différentes variantes du micro-résonateur d'un troisième mode de réalisation d'un capteur optique selon l'invention ;
- les figures 10A et 10B illustrent deux variantes d'une zone de couplage d'un guide d'onde d'injection et extraction selon l'invention ; et
- la figure 11 illustre de manière schématique un procédé de fabrication d'un dispositif optique selon l'invention.

## EXPOSÉ DÉTAILLÉ DE MODES DE RÉALISATION PARTICULIERS

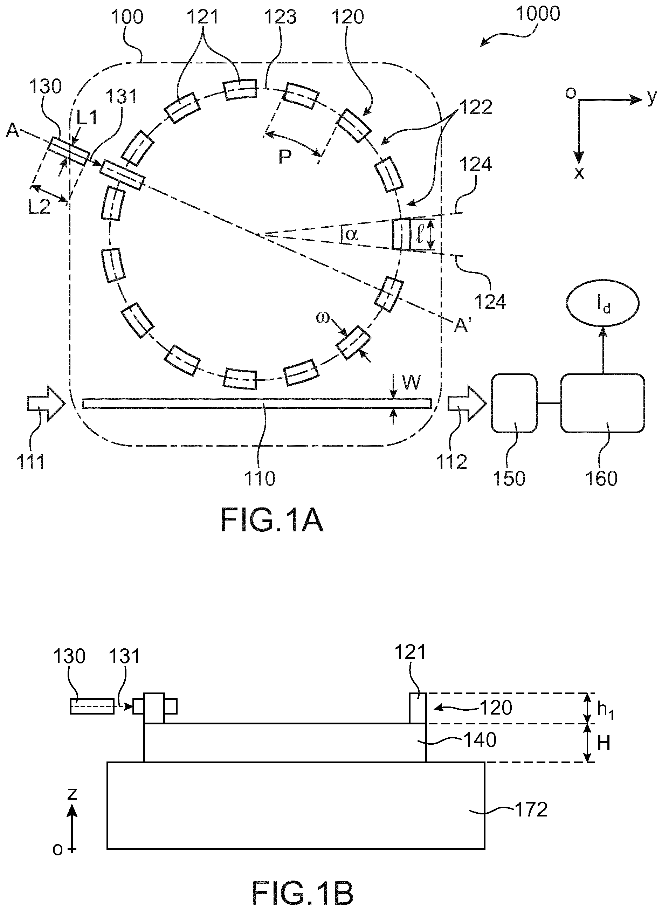

Les figures 1A et 1B illustrent un premier mode de réalisation d'un dispositif optique 100 et un capteur optique 1000 selon l'invention, respectivement selon une vue de dessus, dans le plan (xOy) d'un repère orthonormé, et selon une vue en coupe, dans le plan (yOz) du même repère. A la figure 1A, on a représenté le plan de coupe AA' correspondant à la figure 1B.

Le dispositif optique 100 comprend :

- un guide d'onde d'injection et extraction 110, configuré pour guider un faisceau lumineux dit faisceau d'analyse ; et
- un micro-résonateur à guide d'onde 120, configuré pour guider au moins une portion du faisceau d'analyse selon un chemin optique 123 en boucle fermée.

Selon l'invention, le micro-résonateur à guide d'onde 120 est constitué d'une pluralité de tronçons de guide d'onde, dits guides d'onde élémentaires 121.

Les guides d'onde élémentaires 121 définissent ensemble le chemin optique 123 parcouru par la lumière dans le micro-résonateur, ici un chemin optique 123 circulaire (représenté en trait pointillé sur la figure 1A). En d'autres termes, ils sont agencés les uns à la suite des autres selon un agencement en forme d'anneau.

Les plusieurs guides d'onde élémentaires sont espacés les uns des autres. En d'autres termes, l'entrée d'un guide d'onde élémentaire n'est pas en contact physique direct avec la sortie d'un guide d'onde élémentaire voisin. Les guides d'onde élémentaires sont séparés deux à deux par un espace libre respectif 122.

Chacun des guides d'onde élémentaires 121 est dépourvu de gaine, de sorte qu'en fonctionnement, un milieu environnant autour du micro-résonateur 120 fait office de gaine.

Chaque guide d'onde élémentaire 121 est avantageusement constitué d'un même et unique matériau (ou alliage). Ce matériau est le même pour tous les guides d'onde élémentaires 121.

Les guides d'onde élémentaires sont avantageusement en silicium ou en nitrure de silicium.

Ils sont par exemple en silicium, pour guider un faisceau lumineux dans l'infrarouge (longueur d'onde supérieure à 1 $\mu$m, en particulier comprise entre 1 $\mu$m et 10 $\mu$m).

En variante, les guides d'onde élémentaires 121 sont en nitrure, en particulier du nitrure de silicium ($Si_3N_4$), pour guider un faisceau lumineux dans le visible (longueur d'onde strictement inférieure à 1 $\mu$m, en particulier comprise entre 0,4 $\mu$m et 0,8 $\mu$m).

On peut considérer que le micro-résonateur 120 forme un micro-résonateur en anneau segmenté, c'est-à-dire un micro-résonateur tel que décrit en introduction, dans lequel seuls certains tronçons du guide d'onde courbé sont conservés, et forment les guides d'onde élémentaires.

Le micro-résonateur 120 est disposé à proximité du guide d'onde d'injection et extraction 110.

Au niveau du micro-résonateur 120, le guide d'onde d'injection et extraction 110 s'étend selon une ligne droite, parallèle à une tangente au micro-résonateur.

Le guide d'onde d'injection et extraction 110 s'étend à l'extérieur du micro-résonateur 120, sans forcément de contact physique direct avec celui-ci.

Dans la suite, on illustre, mais de manière non limitative, un exemple dans lequel le guide d'onde d'injection et extraction 110 est espacé du micro-résonateur 120.

De préférence, le guide d'onde d'injection et extraction 110 est constitué, comme les guides d'onde élémentaires 121, d'un unique matériau (ou alliage), le milieu environnant faisant office de gaine. Cet unique matériau est avantageusement le même que celui constituant les guides d'onde élémentaires.

Dans l'exemple décrit en référence aux figures 1A et 1B, le guide d'onde d'injection et extraction est avantageusement formé non suspendu, mécaniquement stable relativement au micro-résonateur.

Le micro-résonateur 120 et le guide d'onde d'injection et extraction 110 sont couplés optiquement l'un à l'autre par couplage évanescent.

En fonctionnement, le guide d'onde d'injection et extraction 110 reçoit en entrée un faisceau lumineux 111 dit faisceau d'analyse.

Au moins une partie du faisceau d'analyse est transférée dans le micro-résonateur 120, par couplage évanescent. Cette partie du faisceau d'analyse est un signal à une longueur d'onde de résonance du micro-résonateur 120. Il peut s'agir de tout ou partie du faisceau d'analyse.

Une longueur d'onde de résonance du micro-résonateur est une longueur d'onde pour laquelle le déphasage apporté par un tour dans le micro-résonateur est un multiple de $2\pi$.

Cette partie du faisceau d'analyse, transférée du guide d'onde d'injection et extraction 110 vers le micro-résonateur 120, effectue plusieurs tours dans le micro-résonateur 120 avant de revenir dans le même guide d'onde d'injection et extraction 110.

Toute la lumière ne revient pas dans le guide d'onde d'injection et extraction 110, du fait des pertes lors de la propagation dans le micro-résonateur 120. Ces pertes peuvent même être de 100%.

Comme représenté en figure 1B, tous les guides d'onde élémentaires 121, d'épaisseur $h_1$ sont disposés ici sur un même support plan 140, d'épaisseur $H$.

Les épaisseurs $H$ et $h_1$ sont mesurées selon l'axe (Oz), orthogonal au plan du micro-résonateur.

A la figure 1B, mais de manière non limitative, l'épaisseur $H$ est supérieure ou égale à l'épaisseur $h_1$.

Le support plan 140 s'étend sous l'ensemble des guides d'onde élémentaires 121, entre ces guides d'onde élémentaires 121 et un substrat 172.

Le support plan 140 est en contact physique direct, d'un côté avec chacun des guides d'onde élémentaires 121, et de l'autre avec ledit substrat 172.

Ainsi, le micro-résonateur 120 n'est pas suspendu au-dessus de ce substrat 172. En d'autres termes, les points d'appui d'un guide d'onde élémentaire 121 sur le substrat 172 sont alignés avec ledit guide d'onde élémentaire, le long de l'axe (Oz). Dit encore autrement, les guides d'onde élémentaire 121 sont en appui sur le substrat 172, sans bras de levier.

Les guides d'onde élémentaires sont donc mécaniquement stables, les uns relativement aux autres, et relativement au substrat 172.

De nombreuses variantes d'un agencement du micro-résonateur 120 non suspendu au-dessus du substrat 172 peuvent être mises en œuvre, par exemple sans le support plan intermédiaire 140.

Selon le premier mode de réalisation de l'invention, le dispositif optique 100 comprend en outre un élément mobile annexe 130, pouvant se déplacer relativement au micro-résonateur 120, de préférence selon un mouvement d'oscillation.

A la figure 1B, on a représenté des guides d'onde élémentaires 121 de largeur réduite, pour une meilleure illustration de l'élément mobile annexe 130. Néanmoins, les guides d'onde élémentaires 121 sont de préférence plus larges que hauts (dimension selon (Oz)).

L'agencement mobile de l'élément 130 peut être réalisé par une fixation suspendue, une extrémité de l'élément 130 pouvant être laissée libre.

L'élément mobile annexe 130 est situé dans le champ proche du micro-résonateur, espacé de ce dernier d'une distance inférieure à quelques centaines de nanomètre, par exemple moins de 600 nm et même moins de 300 nm.

L'une au moins des dimensions de l'élément mobile d'annexe est inférieure à 0,5 $\mu$m, de préférence entre 10 nm et 300 nm.

L'élément mobile annexe 130 est ici une nano-poutre, de largeur L1 comprise entre 100 nm et 200 nm, et de longueur L2 valant environ 1 $\mu$m.

Ici, l'épaisseur de la nano-poutre 130 (selon l'axe (Oz)) est inférieure à celle des guides d'onde élémentaires 121, sans que cet exemple soit limitatif.

La nano-poutre est mobile entre deux positions extrêmes. Sur les figures 1A et 1B, la nano-poutre 130 est représentée deux fois, en chacune de ces deux positions extrêmes.

Le chemin 131 suivi par la nano-poutre, entre ces deux positions extrêmes, est représenté par une flèche en pointillés.

Le chemin 131 s'étend ici dans un plan parallèle au plan du micro-résonateur 120. Il définit ici un rayon du micro-résonateur 120.

Dans tout le texte, le plan du micro-résonateur est un plan recevant les faces supérieures des guides d'onde élémentaires 121, parallèle au plan (Oxy).

Dans une première desdites positions extrêmes, la nano-poutre 130 est orientée vers le centre du micro-résonateur, mais située entièrement à l'extérieur de celui-ci.

Dans ce cas, les pertes optiques dans le micro-résonateur restent limitées. La nano-poutre n'interagit qu'avec la partie évanescente du faisceau circulant dans le micro-résonateur, comme dans l'art antérieur.

Dans l'autre desdites positions extrêmes, la nano-poutre 130 a été translatée le long du chemin 131, et s'étend en partie dans un espace libre 122, entre deux guides d'onde élémentaires 121 voisins.

Elle coupe alors le trajet du faisceau lumineux dans le micro-résonateur 120, ce qui provoque de fortes pertes optiques (par fuites optiques dans la nano-poutre, par réflexions, diffraction, voire perturbation d'une condition sur le pas des guides d'onde élémentaires pouvant annuler une condition de guidage, etc.).

Les pertes optiques augmentent avec un taux d'occupation, par la nano-poutre, d'un espace libre 122 entre deux guides d'onde élémentaires.

La nano-poutre peut se déplacer selon un mouvement d'oscillation, lors duquel elle entre et sort d'un espace libre 122, entre deux guides d'onde élémentaires 121 voisins.

En suivant l'évolution au cours du temps, du spectre du faisceau lumineux 112 en sortie du guide d'onde d'injection et extraction 110, on peut détecter, avec une bonne sensibilité, un déplacement nanométrique de la nano-poutre relativement au micro-résonateur 120 (par exemple un déplacement inférieur à 20 nm).

Selon l'invention, le dispositif optique 100 fait partie d'un capteur optique 1000 comportant en outre :

- un photo-détecteur 150, disposé en sortie du guide d'onde d'injection et extraction 110, du côté opposé à une extrémité d'entrée du faisceau d'analyse 111 dans le guide d'onde d'injection et extraction 110 ; et
- un dispositif d'analyse 160, relié au photo-détecteur 150.

Le photo-détecteur 150 comprend au moins une photodiode. Il peut comprendre en outre des moyens de dispersion spectrale tels qu'un prisme ou un réseau, ou un simple filtre, pour répartir les différentes composantes spectrale d'un faisceau large spectre sur les différentes photodiodes d'une barrette de photodiodes.

Il est agencé à l'une des extrémités du guide d'onde d'injection et extraction, pour recevoir le faisceau 112 émergeant du guide d'onde d'injection et extraction 110, et résultant du couplage entre le micro-résonateur 120 et le guide d'onde d'injection et extraction 110.

Le dispositif d'analyse 160 comprend des moyens électroniques et/ou informatiques, notamment un processeur.

Il reçoit en entrée un signal fourni par le photo-détecteur 150.

Ce signal se présente avantageusement, mais de manière non limitative, sous la forme d'un spectre en longueur d'onde du faisceau 112, émergeant du guide d'onde d'injection et extraction 110.

Le dispositif d'analyse 160 comporte en particulier un comparateur, électronique ou informatique, pour comparer le signal fourni par le photo-détecteur 150 avec des données de référence, et pour en déduire une information $I_d$ relative à un déplacement au sein du dispositif optique 100.

L'information $I_d$ est fournie en sortie du dispositif d'analyse 160.

Ici, le dispositif d'analyse 160 met en œuvre en particulier une comparaison entre un premier spectre en longueur d'onde, fourni par le photo-détecteur 150 à un instant initial t0, et un second spectre en longueur d'onde, fourni par le photo-détecteur 150 à un instant t1 ultérieur à t0. Le spectre en longueur d'onde, fourni à l'instant initial t0, forme alors les données de référence.

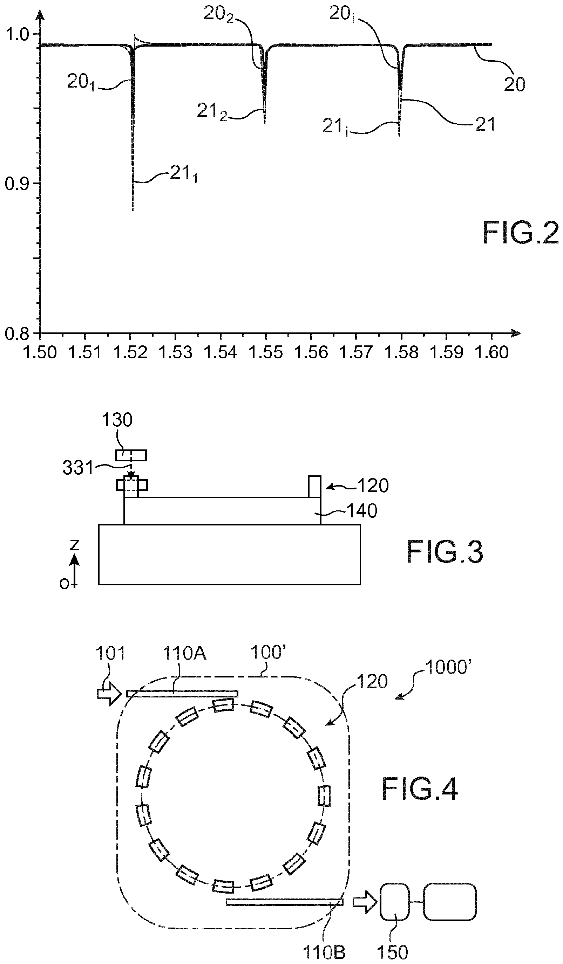

La figure 2 illustre :

- le spectre en longueur d'onde 20 (en trait plein), fourni par le photo-détecteur 150 à un instant initial t0, lorsque la nano-poutre 130 se trouve à l'extérieur d'un espace libre entre deux guides d'onde élémentaires 121 voisins ; et
- le spectre en longueur d'onde 21 (en trait pointillé), fourni par le photo-détecteur 150 à l'instant t1, lorsque la nano-poutre 130 traverse un tel espace libre.

L'axe des abscisses est une longueur d'onde, en $\mu$m. L'axe des ordonnées est un taux de transmission d'une extrémité à l'autre du guide d'onde d'injection et extraction 110.

Le micro-résonateur 120 est constitué de 500 guides élémentaires 121 en silicium, baignant dans de l'air. Le pas de répartition des guides élémentaires 121 est de 40 nm. Ils sont répartis selon un anneau de rayon médian égal à 5 $\mu$m. Le guide d'onde d'injection et extraction présente une section de 500 nm sur 220 nm. L'interstice entre le guide d'onde d'injection et extraction 110 et le micro-résonateur 120 est de 300 nm. La nano-poutre est un parallélépipède rectangle de dimensions 1000 nm x 220 nm x 30 nm.

Les spectres 20 et 21 correspondent chacun au faisceau d'analyse, diminué des pertes dans le micro-résonateur 120. Ces pertes sont localisées aux longueurs d'onde de résonance du micro-résonateur 120. Ces pertes forment des minima de transmission $20_1$, $20_2$... $20_i$, respectivement $21_1$, $21_2$... $21_i$, sur les spectres 20, respectivement 21.

Comme attendu, les pertes sont bien plus élevées lorsque la nano-poutre 130 coupe le chemin optique du faisceau transitant dans le micro-résonateur. En particulier, le taux de transmission à la plus petite longueur d'onde de résonance est diminué d'environ 8%, lorsque la nano-poutre 130 coupe le chemin optique du faisceau transitant dans le micro-résonateur.

Ainsi, l'évolution au cours du temps du spectre du signal en sortie du guide d'onde d'injection et extraction, permet de détecter avec une très bonne sensibilité que la nano-poutre rentre ou sort d'un espace libre entre deux guides d'onde élémentaires voisins.

Il s'agit en particulier, ici, de suivre l'évolution en fonction du temps des valeurs d'intensité au niveau des minima de transmission.

L'information, $I_d$, relative à un déplacement au sein du dispositif optique 100, peut être constituée de la simple détection d'un déplacement supérieur à un seuil prédéterminé.

Selon une variante avantageuse, le dispositif d'analyse 160 utilise le résultat de la comparaison, ici une comparaison de spectres, pour calculer la valeur de ce déplacement (en unité de longueur).

L'information, $I_d$, comporte alors cette valeur de ce déplacement.

Les calculs mis en œuvre pour calculer ce déplacement ne seront pas décrits ici plus avant, et ne présenteront pas de difficulté en soi pour l'homme du métier, spécialiste de l'utilisation des micro-résonateurs pour mesurer un déplacement.

Chaque déplacement peut être considéré comme une somme de deux déplacements, un premier déplacement où la nano-poutre reste entièrement à l'extérieur du micro-résonateur, et un second déplacement où la nano-poutre traverse une portion de plus en plus grande d'un espace libre entre deux guides d'onde élémentaires.

Le premier déplacement peut reprendre des calculs mis en œuvre dans l'art antérieur. Le second déplacement implique des calculs originaux, basés sur des simulations ou sur un modèle théorique du micro-résonateur.

De nombreuses variantes peuvent être mises en œuvre, sans sortir du cadre de l'invention.

Par exemple, la nano-poutre 130 peut se déplacer selon un chemin vertical 331, orthogonal au plan du micro-résonateur 120, comme illustré en figure 3. Là-encore, la largeur des guides d'onde élémentaires n'est pas représentative, ces derniers étant de préférence plus larges que hauts.

D'autres chemins peuvent combiner des composantes selon (Oz) et selon (Oxy).

Selon une variante non représentée, l'élément mobile annexe est une membrane.

Selon une autre variante, le guide d'onde d'injection et extraction 110 est remplacé par un guide d'onde d'injection 110A, pour injecter le faisceau d'analyse 111 dans le micro-résonateur, et un guide d'onde d'extraction 110B distinct du guide d'onde d'injection, pour recevoir ce qu'il reste du faisceau d'analyse après transit dans le micro-résonateur 120.

Cette variante est illustrée par le dispositif optique 100' et le capteur optique 1000' de la figure 4. A la figure 4, la nano-poutre n'est pas représentée.

Dans ce cas, le faisceau d'analyse 111 peut être un faisceau monochromatique, à une longueur d'onde de résonance du micro-résonateur 120, et le photo-détecteur 150 peut être constitué d'une simple photodiode, sensible à cette longueur d'onde.

Ainsi, le signal fourni par le photo-détecteur 150, au dispositif d'analyse 160, n'est pas un spectre mais une valeur unique d'intensité lumineuse.

La comparaison mise en œuvre au sein du dispositif d'analyse est ensuite une comparaison entre une valeur d'intensité mesurée à l'instant t1, et une valeur de référence. Ladite valeur de référence peut être constituée par une valeur d'intensité mesurée à un instant t0, précédent l'instant t1.

Cette variante présente l'avantage que le photo-détecteur 150 ne reçoit que la longueur d'onde affectée par un déplacement. Il offre donc une sensibilité accrue à ce déplacement, sous réserve que la longueur d'onde de résonance soit connue, et peu affectée par le déplacement.

Selon une autre variante, le dispositif optique selon l'invention ne comporte pas d'élément mobile annexe, et on détecte le déplacement du guide d'onde d'injection et extraction, respectivement du guide d'onde d'injection et/ou du guide d'onde d'extraction. Ledit guide d'onde est alors avantageusement agencé suspendu, en appui sur au moins deux piliers.

Selon une autre variante, le dispositif optique selon l'invention comporte au contraire plusieurs éléments mobiles annexes tels que des nano-poutres. Ces plusieurs éléments se déplacent ensemble, et ont ensemble une plus grande influence sur les variations de signal en sortie du guide d'onde d'injection et extraction. On augmente ainsi la sensibilité à une sollicitation à l'origine de ces déplacements.

Selon une autre variante, le micro-résonateur est agencé suspendu, mais ses modes de vibration sont peu susceptibles de modifier le signal transitant dans le micro-résonateur.

Dans chacune des variantes de l'invention, les données de référence sont avantageusement des données précédemment mesurées par le photo-détecteur 150. Il peut également s'agir de données précédemment calculées, obtenues de manière entièrement théorique, ou à partir de mesures expérimentales compilées lors d'une étape préliminaire de calibration.

Le dispositif optique selon l'invention peut être placé à l'intérieur d'une cavité hermétique mise sous vide. Il peut également être placé au sein d'un cryostat, pour limiter le bruit thermique brownien de déplacement. Il est cependant, de préférence, soumis à la pression atmosphérique.

Le capteur optique selon l'invention peut comporter la source lumineuse adaptée à l'émission du faisceau d'analyse 111.

Selon une variante non représentée, les guides d'onde élémentaires peuvent présenter une forme de parallélépipède rectangle. Le pas de répartition des guides d'onde élémentaires 121 étant réduit, de préférence inférieur à 2 μm, le chemin optique de la lumière guidée dans le micro-résonateur 120 peut être assimilé à un chemin circulaire.

On détaille dans la suite des règles avantageuses de dimensionnement du dispositif optique selon l'invention. On se réfèrera à la figure 1A pour illustration des grandeurs mentionnées.

Le micro-résonateur, ici en forme d'anneau, présente avantageusement un rayon externe inférieur ou égal à 10 μm, en particulier inférieur ou égal à 5 μm.

De préférence, tous les guides d'onde élémentaires présentent la même forme et les mêmes dimensions. La forme d'un guide d'onde élémentaire 121 est ici une portion d'un cylindre droit à base annulaire, cette portion étant délimitée par deux plans 124 recevant la génératrice du cylindre et définissant ensemble un angle α.

Chaque guide d'onde élémentaire 121 est caractérisé par une hauteur, une largeur w et une longueur l (ici l est une longueur curviligne, mesurée au centre du guide d'onde élémentaire).

Les différents guides d'onde élémentaires 121 sont répartis de façon périodique les uns à la suite des autres, selon un pas régulier P, dit pas de répartition.

Ici, le pas P désigne une longueur curviligne, correspondant à la longueur curviligne d'un guide d'onde élémentaire 121 et d'un espace libre 122. Il s'agit en d'autres termes de la longueur curviligne d'une portion du chemin optique 123, suivi par la lumière au centre d'un guide d'onde élémentaire 121 et dans l'espace libre 122 adjacent.

Afin que la structure en guides d'onde élémentaires indépendants n'affecte pas le faisceau lumineux guidé dans le micro-résonateur, le pas P est inférieur à la longueur d'onde centrale de ce faisceau lumineux.

A cette échelle, la lumière n'est sensible qu'à un indice de réfraction moyen entre l'indice des guides d'onde élémentaires 121 et l'indice dans les espaces libres 122, et n'est pas diffractée. En d'autres termes, le cœur du micro-résonateur 120 se comporte comme un matériau d'indice de réfraction moyen :

$$n_{moy} = \sqrt{\frac{l}{P} n_h^2 + \frac{P-l}{P} n_b^2}$$  (2)

avec :

l la longueur curviligne d'un guide d'onde élémentaire ;
P le pas de répartition des guides d'onde élémentaires ;
$n_h$ l'indice de réfraction moyen dans un guide d'onde élémentaire ; et
$n_b$ l'indice de réfraction moyen entre deux guides d'onde élémentaires, c'est-à-dire l'indice de réfraction moyen du milieu entourant les guides d'onde élémentaires (ce milieu pouvant inclure un élément mobile annexe tel que décrit ci-avant).

L'indice de réfraction moyen $n_{moy}$ constitue un indice optique équivalent du micro-résonateur selon l'invention.

De préférence, le pas P vérifie en particulier :

$$P < \frac{\lambda}{2n_{moy}}$$  (3)

avec :
λ la longueur d'onde centrale du faisceau lumineux qui se propage dans le micro-résonateur, ou en d'autres termes une longueur d'onde de résonance du micro-résonateur, ou en d'autres termes la longueur d'onde de résonance exploitée du micro-résonateur.

On a même avantageusement :

$$P < \frac{\lambda}{2n_h}$$  (4)

avec :
$n_h$ l'indice de réfraction moyen dans un guide d'onde élémentaire.
Ici, les guides d'onde élémentaires sont constitués d'un seul et même matériau, donc $n_h$ est l'indice de réfraction des guides d'onde élémentaires.

En pratique, le pas de répartition P est avantageusement inférieur à 3 μm, et même inférieur à 2 μm, voire 1 μm.

Selon l'invention, le micro-résonateur 120 présente un mode guidé d'indice effectif sensiblement égal à l'indice effectif d'un mode guidé du guide d'onde d'injection et extraction 110, de préférence exactement égal. Par sensiblement égal, on entend égal à plus ou moins 1% près, voire à plus ou moins 5 % près voire même à plus ou moins 10% près.

Pour rappel, l'indice effectif d'un mode, notamment l'indice effectif d'un mode guidé d'un guide d'onde, est défini de la façon suivante :

$$N_{eff} = \beta * \frac{\lambda}{2\pi} \qquad (5)$$

avec :

$N_{eff}$ l'indice effectif du mode considéré ;
$\lambda$ la longueur d'onde du faisceau lumineux se propageant dans le guide d'onde ; et
$\beta$ la constante de phase du guide d'onde.

La constante de phase $\beta$ dépend de la longueur d'onde et du mode du faisceau lumineux se propageant dans le guide d'onde, ainsi que des propriétés de ce guide d'onde (en particulier indices de réfraction et géométrie).

La constante de phase $\beta$ est définie par : $A(z) = A(0)\exp(\gamma z)$, où z est une abscisse selon un chemin de propagation dans le guide d'onde, $A(z)$ est l'amplitude complexe en fonction de z d'un faisceau lumineux se propageant dans le guide d'onde, et $\beta$ est la partie imaginaire de $\gamma$.

On peut parfois considérer que l'indice effectif désigne l'indice optique moyen du milieu tel qu'il est « vu » par un mode du faisceau lumineux se propageant dans le guide d'onde.

De préférence, le mode guidé dans le micro-résonateur, respectivement dans le guide d'onde d'injection et extraction, est un mode d'ordre zéro.

Le guide d'onde d'injection et extraction 110 étant formé d'un seul tenant, et le micro-résonateur 120 étant formé segmenté, la condition ci-dessus sur les indices effectifs des modes guidés se traduit avantageusement par une condition sur les largeurs respectives du guide d'onde d'injection et extraction 110 et des guides d'onde élémentaires 121.

Avantageusement, on a :

$$w > W \qquad (6)$$

avec :

w la largeur d'un guide d'onde élémentaire 121, mesurée dans un plan orthogonal au chemin optique 123 parcouru par la lumière dans le micro-résonateur 120 ; et
W la largeur du guide d'onde d'injection et extraction 110, mesurée dans un plan orthogonal au chemin optique parcouru par la lumière dans le guide d'onde d'injection et extraction 110.

En pratique, chaque guide d'onde élémentaire 121 présente de préférence une section rectangulaire de hauteur $h_1$ et de largeur w, dans des plans orthogonaux au chemin optique 123 parcouru par la lumière dans le micro-résonateur 120. De la même façon, le guide d'onde d'injection et extraction 110 présente avantageusement une section rectangulaire de hauteur $h_1 = h_2$ et de largeur W, dans des plans orthogonaux au chemin optique parcouru par la lumière dans le guide d'onde d'injection et extraction 110.

L'équation (6) est notamment vérifiée lorsque le guide d'onde d'injection et extraction 110 est constitué du même matériau que les guides d'onde élémentaires 121, et présente donc le même indice de réfraction.

Les largeurs w et W permettant de vérifier la condition ci-dessus sur les indices effectifs des modes guidés, peuvent être calculées avec précision en utilisant des outils de simulation électromagnétique connus de l'homme de l'art. Ces outils de simulation peuvent être utilisés pour ajuster les différents paramètres du dispositif optique selon l'invention, de façon à vérifier ladite condition. Ces paramètres sont notamment des paramètres géométriques (pas de répartition P, longueur curviligne l d'un guide d'onde élémentaire), et des valeurs d'indice de réfraction (indices de réfraction du guide d'onde d'injection et extraction et indice de réfraction des guides d'onde élémentaires).

En particulier, on peut déterminer une valeur optimale du rapport entre les largeurs w et W.

Le rapport de la largeur w divisée par la largeur W est sensiblement égal à 2, avantageusement compris entre 1,9 et 2,1, et même entre 1,8 et 2,2.

De préférence, le rapport entre la longueur curviligne l d'un guide d'onde élémentaire et le pas de répartition P est sensiblement égal à 0,5. En particulier, ce rapport est avantageusement compris entre 0,4 et 0,6, voire entre 0,45 et 0,55, voire exactement égal à 0,5.

En d'autres termes, les espaces libres présentent environ la même longueur curviligne que les guides d'onde élémentaires, ce qui correspond au meilleur compromis technologique puisque ni les guides d'onde élémentaires ni les espaces libres n'ont à présenter de dimensions trop réduites.

De préférence, on a à la fois un rapport d'environ 0,5 entre la longueur curviligne *l* et le pas *P*, et un rapport de la largeur w divisée par la largeur *W* sensiblement égal à 2.

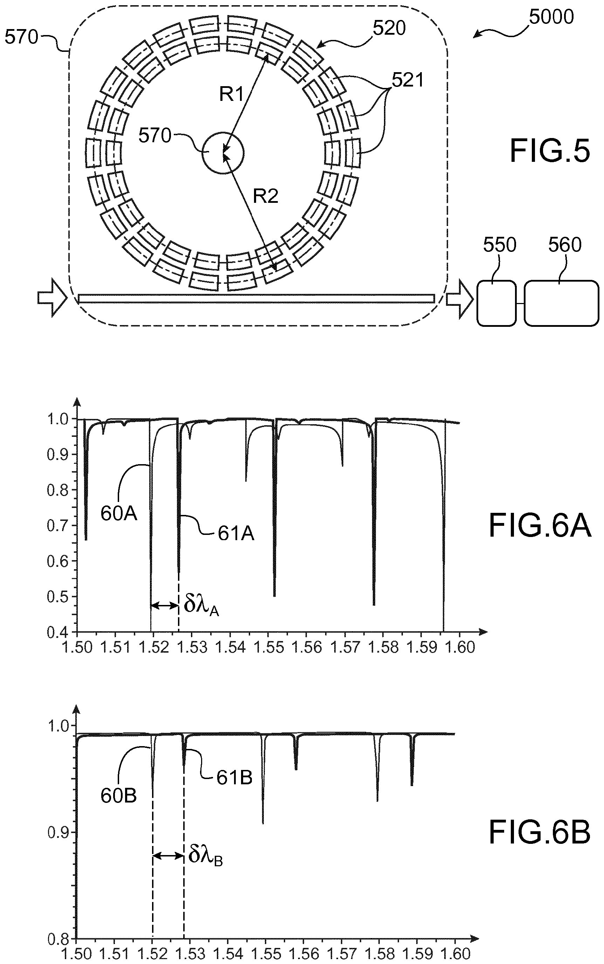

La figure 5 illustre de manière schématique, un deuxième mode de réalisation d'un dispositif optique 500 et un capteur optique 5000 selon l'invention.

Ce deuxième mode de réalisation ne sera décrit que pour ses différences relativement au premier mode de réalisation décrit ci-dessus.

Ici, le micro-résonateur 520 est agencé suspendu au-dessus d'un substrat, en appui sur un pilier central, ou piédestal, 570. En d'autres termes, les points d'appui des guides d'onde élémentaires sur le substrat sont situés sous le piédestal 570. Dit encore autrement, les guides d'onde élémentaires sont en appui sur le substrat par l'intermédiaire d'un bras de levier.

Ici, le dispositif optique 500 ne comporte pas d'élément mobile annexe.

Le déplacement détecté à l'aide de l'invention est alors un déplacement des guides d'onde élémentaires les uns relativement aux autres.

L'agencement suspendu libère en particulier un mouvement de contraction et extension radiales du micro-résonateur 520, correspondant à des modes de respiration du micro-résonateur.

A des fins d'illustration, on a représenté simultanément, en figure 5, le micro-résonateur 520 dans une position de contraction radiale (rayon R1 du micro-résonateur), et dans une position d'extension radiale (rayon R2>R1 du micro-résonateur).

Comme dans l'art antérieur, le mouvement de contraction et extension radiales modifie la longueur curviligne *L* du chemin optique d'un faisceau lumineux faisant un tour dans le micro-résonateur, ce qui modifie les longueurs d'onde de résonance *λ* du micro-résonateur puisque ces deux grandeurs sont liées par :

$$\lambda = \frac{N_{eff}L}{m} \qquad (7)$$

avec :

$N_{eff}$ l'indice effectif du mode guidé dans le micro-résonateur ; et
*m* un entier supérieur ou égal à l'unité (voir également équation (1)).

Ledit mouvement de contraction et extension modifie également la distance entre le micro-résonateur et le guide d'onde d'injection et extraction, et donc un taux de couplage optique entre ces deux éléments. Il modifie également le confinement de la lumière dans le micro-résonateur.

En outre, du fait de la constitution du micro-résonateur 520 en une pluralité de guides d'onde élémentaires 521, ce mouvement se traduit également par un rapprochement puis un éloignement des guides d'onde élémentaires les uns par rapport aux autres (sans changement de dimension significatif pour les guides d'onde élémentaires).

Le rapport entre la longueur *l* d'un guide d'onde élémentaire (constante) et le pas de répartition *P* desdits guides d'onde (modifié) est donc modifié.

Cela se traduit par une variation de l'indice de réfraction moyen $n_{moy}$ du micro-résonateur (voir équation (2)), et donc de l'indice effectif $N_{eff}$ du mode guidé dans le micro-résonateur.

Cette variation de l'indice effectif $N_{eff}$ participe également à modifier les longueurs d'onde de résonance du micro-résonateur. La variation de longueur de résonance, liée au mouvement de contraction et extension radiales, est donc augmentée.

La variation de longueur d'onde de résonance est détectée par le dispositif d'analyse 560, qui peut en déduire une amplitude de contraction et extension radiale du micro-résonateur.

Les figures 6A et 6B illustrent un comparatif de la variation de spectre de transmission obtenue à l'aide d'un capteur selon l'art antérieur (figure 6A), et à l'aide d'un capteur selon l'invention (figure 6B).

Sur les deux figures, l'axe des abscisses est une longueur d'onde, en μm. L'axe des ordonnées est un taux de transmission d'une extrémité à l'autre du guide d'onde d'injection et extraction.

A la figure 6A, les spectres 60A et 61A correspondent chacun à un faisceau d'analyse, diminué des pertes dans un micro-résonateur selon l'art antérieur.

Le spectre 60A est associé à une position d'extension dudit micro-résonateur. Le spectre 61A est associé à une position de contraction dudit micro-résonateur. La variation correspondante de longueur d'onde de résonance, $\delta\lambda_A$, est de 7,7 nm.

A la figure 6B, les spectres 60B et 61B correspondent chacun à un faisceau d'analyse, diminué des pertes dans un micro-résonateur selon l'invention.

Le micro-résonateur associé à la figure 6B ne diffère de celui associé à la figure 6A qu'en ce qu'il est constitué de plusieurs guides d'onde élémentaires espacés les uns des autres. Dans les deux cas, la position de contraction du micro-résonateur correspond à un rayon moyen de 5,00 $\mu$m, et la position d'extension correspond à un rayon moyen de 5,05 $\mu$m (le rayon moyen étant la moyenne du rayon interne et du rayon externe du micro-résonateur).

Le spectre 60B est associé à une position d'extension dudit micro-résonateur. Le spectre 61B est associé à une position de contraction dudit micro-résonateur. La variation correspondante de longueur d'onde de résonance, $\delta\lambda_B$, est de 9,1 nm, soit une amélioration de 18% de la sensibilité aux modes de respiration du micro-résonateur.

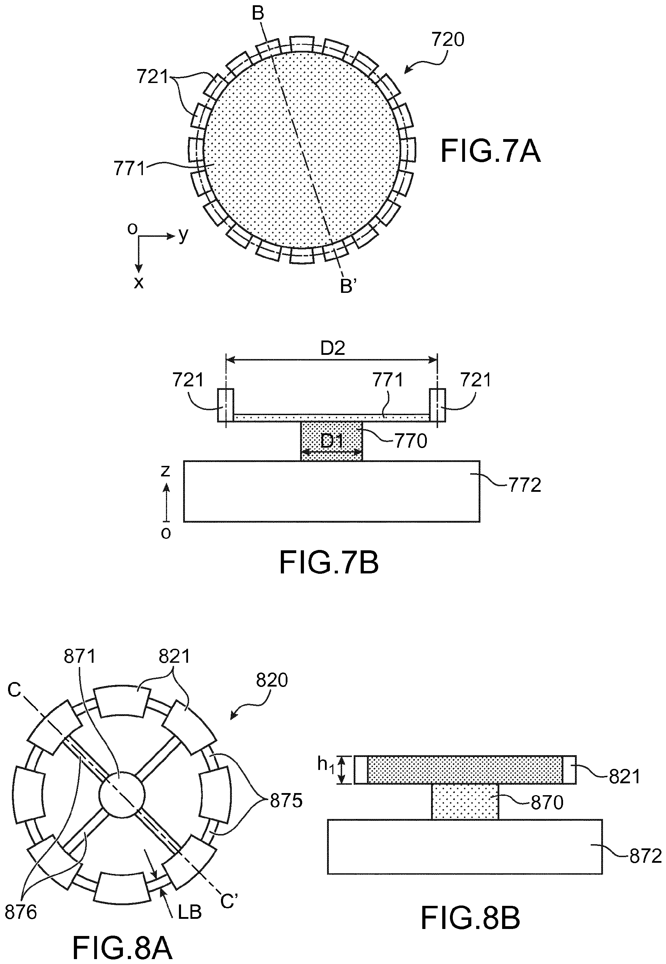

Les figures 7A et 7B illustrent de manière schématique, une première variante d'agencement suspendu du micro-résonateur selon l'invention, respectivement selon une vue de dessus dans un plan horizontal, et selon une vue en coupe dans un plan vertical.

On a représenté en figure 7A le plan de coupe BB', correspondant à la vue de la figure 7B. Là-encore, la largeur des guides d'onde élémentaires est sous dimensionnée.

Le micro-résonateur 720 est agencé suspendu au-dessus d'un substrat 772, en appui sur un piédestal 770.

Le piédestal 770 est centré sur le centre géométrique du micro-résonateur 720.

Le piédestal 770 présente de préférence une forme de cylindre, dont la base présente un diamètre D1 compris entre 0,25 et 0,75 fois le diamètre moyen D2 du micro-résonateur (moyenne du diamètre interne et du diamètre externe), de préférence entre 0,25 et 0,5 fois ce diamètre D2.

Le piédestal est de préférence, mais de manière non limitative, un cylindre de révolution. Il peut également s'agir d'un cylindre à base non circulaire, par exemple à base ovale. Le diamètre D1 est alors la plus grande largeur de la base du cylindre.

Les guides d'onde élémentaires 721 composant le micro-résonateur sont tous montés solidaires d'une même plaque de support 771.

Ils s'étendent ici adjacents à ladite plaque de support 771, le long d'une bordure périphérique de celle-ci.

En pratique, l'ensemble constitué des guides d'onde élémentaires 721 et de la plaque de support 771 peut être formé par gravure d'une unique couche de matériau, de sorte qu'il n'existe physiquement pas d'interface entre un guide d'onde élémentaire 721 et la plaque de support 771.

Selon une variante non représentée, les guides d'onde élémentaires sont situés sur le dessus de la plaque de support 771.

La plaque de support 771 présente une épaisseur réduite, au moins trois fois inférieure à l'épaisseur des guides d'onde élémentaires, voire au moins dix fois inférieure, de sorte qu'elle n'influence pas le guidage optique dans le micro-résonateur.

Elle s'étend selon un plan parallèle au plan du micro-résonateur.

De préférence, elle ne dépasse pas en dehors d'une zone délimitée par les guides d'onde élémentaires.

Elle présente ici une forme de disque plein.

En variante, elle peut présenter d'autres formes, par exemple une forme d'anneau, suspendu autour du piédestal par l'intermédiaire de bras internes.

Les figures 8A et 8B illustrent une deuxième variante d'agencement suspendu du micro-résonateur selon l'invention, respectivement selon une vue de dessus dans un plan horizontal, et selon une vue en coupe dans un plan vertical.

On a représenté en figure 8A le plan de coupe CC', correspondant à la vue de la figure 8B. Là-encore, la largeur des guides d'onde élémentaires est sous dimensionnée.

A la figure 8A, on a représenté un nombre plus réduit de guides d'onde élémentaires par simple souci de lisibilité des figures, sans que cela ne préfigure d'aucune limitation relative à cette variante.

Selon cette variante, les guides d'onde élémentaires sont maintenus suspendus autour du piédestal 870 par l'intermédiaire de bras qui s'étendent parallèles au plan du micro-résonateur. En particulier, les faces supérieures des bras s'étendent dans un plan parallèle au plan du micro-résonateur.

Les bras comprennent ici des bras dits périphériques, 875, qui s'étendent chacun entre un guide d'onde élémentaire 821 et le guide d'onde élémentaire voisin, et des bras dits internes, 876, qui s'étendent chacun entre un guide d'onde élémentaire 821 et le piédestal 870.

Ici, les bras, en particulier les bras périphériques, 875, présentent chacun une largeur LB bien inférieure à celle des guides d'onde élémentaires, par exemple au moins 3 fois inférieure, et même au moins 4 fois ou 5 fois inférieure.

Dans l'exemple représenté en figure 8A, tous les guides d'onde élémentaire 821 sont reliés deux à deux par des bras périphériques 875, et quatre bras internes 876 s'étendent en croix et se rejoignent au-dessus du piédestal 870.

Ici, les bras 875 et 876 sont formés avec les guides d'onde élémentaires dans une même couche, et présentent la même épaisseur $h_1$ que ces derniers (voir figure 8B).

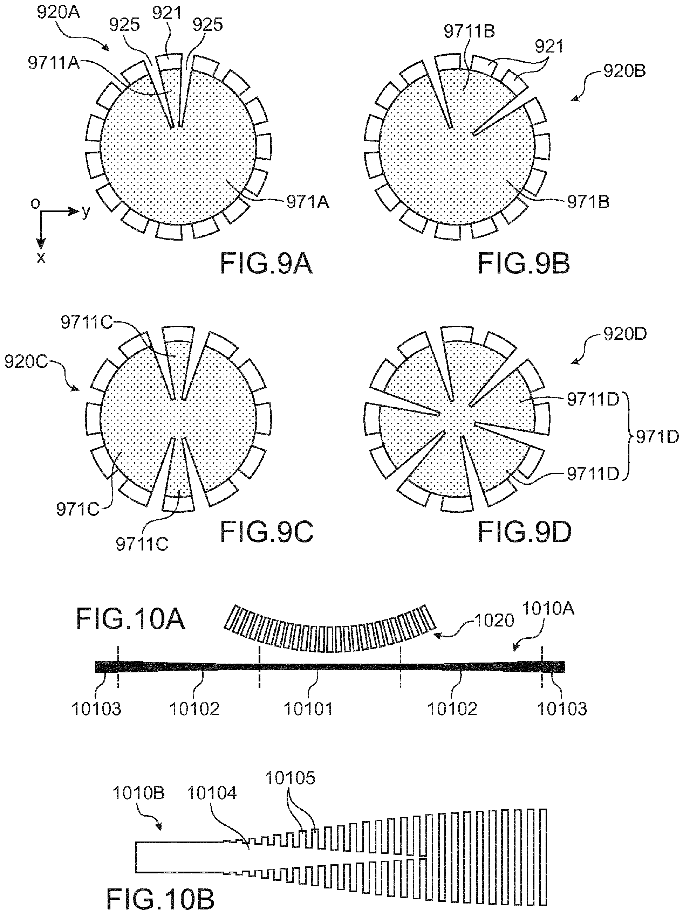

Les figures 9A à 9D illustrent différentes variantes d'un micro-résonateur dans un troisième mode de réalisation d'un dispositif optique et un capteur optique selon l'invention.

Selon ce troisième mode de réalisation, le micro-résonateur est agencé suspendu au-dessus du piédestal, grâce à une plaque de support du type de celle décrite en référence aux figures 7A et 7B.

Par souci de clarté, les figures 9A à 9D ne représentent que le micro-résonateur, selon une vue de dessus.

Selon ce troisième mode de réalisation, la plaque de support est traversée selon son épaisseur par des tranchées 925, ou rainures, ou fentes.

Chaque tranchée 925 s'étend depuis un bord externe de la plaque de support, jusqu'à une région centrale de la plaque, et passe entre deux guides d'onde élémentaires voisins 921.

Ici, les tranchées s'étendent chacune jusqu'au piédestal.

De préférence, chaque tranchée 925 traverse la plaque de support selon toute son épaisseur, formant une ouverture traversante dans ladite plaque.

Chaque tranchée 925 s'étend ici selon un rayon du micro-résonateur en anneau.

A la figure 9A, la plaque de support 971A comporte deux tranchées 925. Ces deux tranchées délimitent latéralement, sur la plaque de support 971, une zone dite isolée 9711A.

La zone isolée 9711A reçoit ici un unique guide d'onde élémentaire 921, nommé guide d'onde isolé, dont le mouvement relativement aux autres guides d'onde élémentaires est libéré.

En particulier, le guide d'onde isolé peut se déplacer horizontalement dans le plan du micro-résonateur 920A, selon un mouvement de rotation autour d'un axe parallèle à (Oz).

Il peut également se déplacer verticalement, passant au-dessus puis en-dessous du plan du micro-résonateur, selon un mouvement de rotation autour d'un axe situé dans le plan (xOy)

Il peut également se déplacer selon un mouvement de rotation autour de l'axe médian de la zone isolée 9711A, cet axe étant situé également dans le plan (xOy).

Chacune de ces rotations se traduit par une augmentation des pertes aux longueurs d'onde de résonance du micro-résonateur, ou par un décalage de la longueur d'onde de résonance, la condition de guidage pouvant même être perdue lorsque le déplacement du guide d'onde isolé ne permet plus de vérifier la condition sur le pas $P$ donnée à l'équation (3).

Cette augmentation des pertes est détectée par le dispositif d'analyse, qui peut en déduire une amplitude du mouvement du guide d'onde isolé.

On réalise ainsi un micro-résonateur, et donc un dispositif et un capteur optiques selon l'invention, sensibles à une plus grande variété de sollicitations externes, en comparaison avec l'art antérieur.

Le micro-résonateur 920B de la figure 9B ne diffère de celui de la figure 9A qu'en ce que la zone isolée 9711B reçoit plusieurs guides d'onde élémentaires voisins 921.

Le micro-résonateur 920C de la figure 9C ne diffère de celui de la figure 9A qu'en ce que la plaque de support 971C comporte deux zones isolées 9711C, chacune étant délimitée latéralement par un couple de deux tranchées.

Chaque zone isolée 9711C reçoit ici un unique guide d'onde élémentaire.

Les deux couples de tranchées sont agencés ici symétriques l'un de l'autre, selon une symétrie planaire relativement à un plan orthogonal au plan du micro-résonateur.

Le micro-résonateur 920D de la figure 9D ne diffère de celui de la figure 9A qu'en ce que la plaque de support 971D comporte une pluralité de tranchées définissant une pluralité de zones isolées 9711D. Les zones isolées 9711D sont symétriques deux à deux, selon des symétries planaires relativement à un plan respectif, orthogonal au plan du micro-résonateur 920D.

Chaque zone isolée 9711D reçoit ici plusieurs guides d'onde élémentaires.

De nombreuses autres variantes peuvent être mises en œuvre sans sortir du cadre de l'invention, comportant plus ou moins de tranchées, présentant ou non des symétries, etc.

La répartition des tranchées permet de privilégier l'un ou l'autre mouvement des guides d'onde élémentaires.

De nombreuses autres variantes peuvent être mises en œuvre, pour découper la plaque de support de manière à isoler différents guides d'onde élémentaires, voisins ou non.

On peut également libérer le mouvement d'un ou plusieurs guides d'onde élémentaires, dans un agencement suspendu tel que décrit en référence aux figures 8A et 8B, par exemple par suppression de certains bras périphériques.

On décrit ci-après un mode de réalisation particulièrement avantageux d'un capteur optique selon l'invention. Selon ce mode de réalisation, non représenté, le micro-résonateur est agencé suspendu au-dessus du piédestal, avec une pluralité de guides d'onde élémentaires dont le mouvement est libéré de manière qu'ils puissent se déplacer verticalement en passant au-dessus ou en-dessous puis dans le plan du micro-résonateur, selon un mouvement de rotation autour d'un axe situé dans le plan (xOy). Les guides d'onde élémentaires dont le mouvement est ainsi libéré sont répartis de manière périodique le long du micro-résonateur. Ils sont reliés à des moyens de pilotage, aptes à les déplacer pour les placer alternativement dans le plan du micro-résonateur ou hors du plan du micro-résonateur (au-dessus ou en-dessous). Lesdits moyens de pilotage réalisent ainsi une commutation du micro-résonateur entre :

- un mode dit de fonctionnement, dans lequel tous les guides d'onde élémentaires sont agencés coplanaires dans un même plan horizontal *PH*1, et répartis dans ce plan selon un pas de répartition $P_1$ en vérifiant l'équation (3)

$$P_1 < \frac{\lambda}{2n_{moy\_1}} \; ; \text{et}$$

- un mode dit d'extinction, dans lequel certains des guides d'onde élémentaires s'étendent en dehors du plan *PH*1, et dans lequel les guides d'onde élémentaires restant dans le plan *PH*1 sont répartis selon un pas de répartition $P_2$

en vérifiant l'équation $P_2 = \frac{\lambda}{2n_{moy\_2}}$ .

$n_{moy-1}$ désigne l'indice de réfraction moyen du cœur du micro-résonateur, dans le mode de fonctionnement.

$n_{moy\_2}$ désigne l'indice de réfraction moyen du cœur de la structure formée par les guides d'onde élémentaires restant dans le plan du micro-résonateur, dans le mode d'extinction.

$\lambda$ désigne la longueur d'onde du faisceau lumineux se propageant dans le micro-résonateur dans le mode de fonctionnement, ou longueur d'onde de résonance exploitée.

Le mode de fonctionnement correspond aux conditions normales de fonctionnement telles que décrites ci-avant.

Dans le mode d'extinction, les guides d'onde élémentaires restant dans le plan *PH1* ne réalisent aucun guidage optique du signal arrivant par le guide d'onde d'injection, respectivement d'injection et extraction. En d'autres termes, ils forment un interrupteur ouvert. On remarque qu'ils vérifient en effet la condition d'un miroir de Bragg.

On pourrait mettre en œuvre une commutation entre trois modes, où le troisième mode vérifie

$$P_3 > \frac{\lambda}{2n_{moy\_3}}, \text{, avec } P_3 \text{ le pas de répartition des guides d'onde élémentaires situés dans le plan du micro-résonateur}$$

dans ce troisième mode, et $n_{moy\_3}$ l'indice de réfraction moyen du cœur de la structure formée par les guides d'onde élémentaires situés alors dans le plan du micro-résonateur. Ce troisième mode correspond à un guidage avec beaucoup de pertes.

Les figures 10A et 10B illustrent deux variantes d'une zone de couplage d'un guide d'onde d'injection et extraction selon l'invention.

Ladite zone de couplage se trouve à proximité du micro-résonateur, là où se produit le couplage évanescent entre le guide d'onde d'injection et extraction et le micro-résonateur. Afin de favoriser ce couplage, on peut améliorer l'accord de phase entre les modes respectifs propagés dans le guide d'onde d'injection et extraction et dans le micro-résonateur.

L'accord de phase est respecté, lorsque les indices effectifs respectifs du guide d'onde d'injection et extraction et du micro-résonateur, sont identiques.

On décrit ci-dessous deux solutions pour obtenir cette égalité des indices effectifs.

A la figure 10A, la largeur du guide d'onde d'injection et extraction 1010A diminue progressivement puis augmente de nouveau, au fur et à mesure que l'on se rapproche, puis s'éloigne du micro-résonateur 1020.

Le guide d'onde d'injection et extraction 1010A comporte alors une zone 10101 de largeur réduite, adjacente au micro-résonateur, deux zones 10102 de couplage adiabatique (tapers), de largeur décroissante, respectivement croissante, et deux zones 10103 de plus grande largeur, de part et d'autre de la zone 10101.

En variante, on peut favoriser le couplage à l'aide d'un guide d'onde d'injection et extraction 1010B dont la forme varie progressivement jusqu'à se rapprocher de la forme segmentée du micro-résonateur (voir figure 10B).

Le guide d'onde d'injection et extraction 1010B est segmenté, dans une région adjacente au micro-résonateur. La transition de guide droit à guide segmenté se fait à l'aide d'une zone centrale 10104 (taper), pleine, dont la largeur décroît en se rapprochant du micro-résonateur.

La forme du guide d'onde d'injection et extraction 1010B est délimitée par une enveloppe externe dont la largeur augmente en se rapprochant du micro-résonateur.

A l'intérieur de cette enveloppe externe, des segments, 10105, sont répartis selon un pas périodique de part et d'autre de la zone centrale 10104. Les segments 10105 s'étendent chacun depuis la zone centrale 10104 jusqu'à l'enveloppe externe. Au niveau du micro-résonateur, le guide d'onde d'injection et extraction 1010B ne comporte plus que des segments 10105, qui s'étendent chacun d'un bord à l'autre de l'enveloppe externe.

Le pas de répartition des segments 10105 est sensiblement égal au pas de répartition des guides d'onde élémentaires du micro-résonateur.

Les différents modes de réalisation décrits ci-dessus peuvent être combinés ensemble. Par exemple, on peut combiner l'agencement suspendu du micro-résonateur et la détection d'un déplacement d'un élément mobile annexe.

Ces modes de réalisation comprennent à chaque fois un micro-résonateur couplé à un oscillateur mécanique, ou formant lui-même un oscillateur mécanique. Dans le premier cas, le micro-résonateur est figé, et un élément annexe se déplace dans son champ proche, l'élément annexe pouvant être un guide d'onde d'injection et/ou extraction.

L'invention n'est pas limitée aux exemples décrits ci-dessus, et on pourra réaliser de nombreuses variantes sans sortir du cadre de l'invention.

Par exemple, les guides d'onde élémentaires peuvent ne pas être agencés selon une forme d'anneau, mais selon une autre forme de boucle fermée, par exemple un triangle à angles arrondis, un rectangle à angles arrondis, une forme dite de piste de course (ou « *racetrack* », en anglais, formée de deux demi-cercles joints par deux segments parallèles), etc.

Le dispositif optique selon l'invention peut également comprendre une pluralité de micro-résonateurs selon l'invention, couplés optiquement entre eux par un couplage évanescent.

Le capteur optique selon l'invention permet de détecter et mesurer des déplacements nanométriques (par exemple moins de 20 nm), au sein du micro-résonateur ou dans son champ proche.

Ces déplacements nanométriques peuvent être engendrés par une sollicitation telle qu'une accélération du repère recevant le dispositif optique selon l'invention, une rotation de ce repère, un déplacement d'une particule de masse non nulle (par exemple une particule tombant sur une nano-poutre telle que décrite ci-avant), un déplacement de photon, un déplacement d'atome, etc.

Le dispositif d'analyse peut être agencé pour convertir la mesure d'un tel déplacement, en une valeur d'accélération, ou de vitesse angulaire, ou de masse, ou de radiation électromagnétique, ou de déplacement d'atome, etc., pour former ainsi un capteur de type accéléromètre, ou gyromètre, ou capteur sensible à la masse tel qu'un spectromètre de masse, ou capteur de pression de radiation, ou capteur pour une source de photons, etc.

L'invention ne concerne pas le dispositif optique à micro-résonateur en tant que tel.

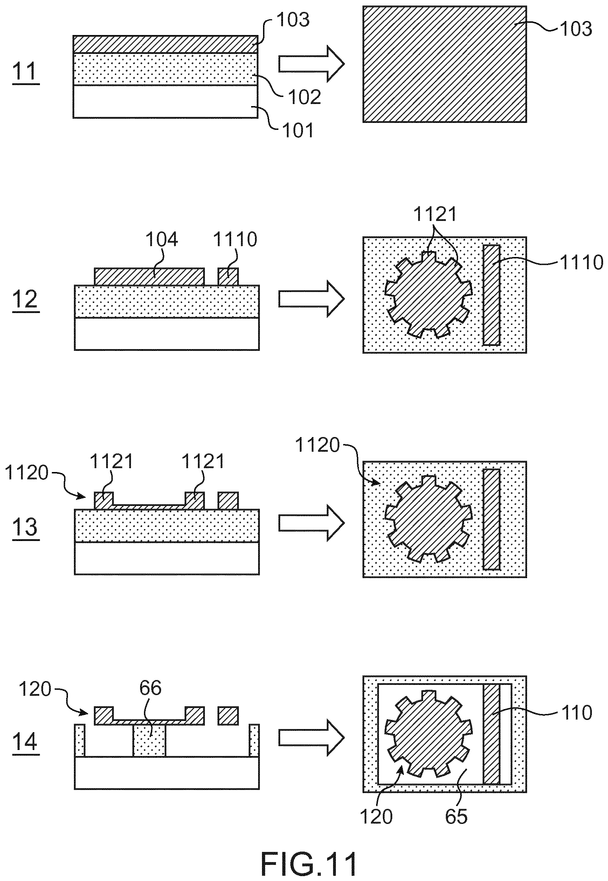

La figure 11 illustre de manière schématique un exemple d'un procédé de fabrication d'un dispositif optique selon l'invention.

A gauche, le dispositif en cours de fabrication est représenté selon une vue en coupe.

A droite, le dispositif en cours de fabrication est représenté selon une vue de dessus.

Le procédé de fabrication utilise un empilement dit SOI (pour « *Silicon On Insulator* »), constitué des trois couches suivantes superposées: un substrat 101 (par exemple en silicium), une couche intermédiaire 102 en dioxyde de silicium, et une couche supérieure 103 en silicium (point de départ 11).

Au cours d'une première étape 12, on grave la couche supérieure 103 en silicium sur toute son épaisseur, ici pour former le guide d'onde d'injection et extraction 1110 et un disque cranté 104 en silicium. Chaque cran du disque cranté 104 correspond à un guide d'onde élémentaire 1121 du micro-résonateur.

Le procédé selon l'invention comprend ensuite une étape 13 de gravure du disque 104, sur une partie seulement de son épaisseur. Au cours de cette étape 13, on grave le disque 104 dans une région centrale de celui-ci, pour former le micro-résonateur 1120.

La gravure conserve une faible épaisseur de la région centrale du disque 104, ce qui permet d'assurer la tenue mécanique du micro-résonateur 1120, et en particulier de maintenir solidaires entre eux les guides d'onde élémentaires 1121 (cf. plaque de support décrite en référence aux figures 7A et 7B).

Selon une variante non représentée, on grave, à l'étape 12, un disque plein (et non un disque cranté). A l'étape 13, on grave le disque plein sur une partie de son épaisseur, dans une région centrale et dans des régions annulaires de celui-ci. Les guides d'onde élémentaires sont alors disposés sur un disque résiduel de faible épaisseur.

Enfin, dans une étape 14, on grave la couche intermédiaire 102 sur toute son épaisseur pour former une cavité 105 sous le micro-résonateur 1120 et le guide d'onde d'injection et extraction 1110. La gravure conserve, sous le micro-résonateur 1120, un piédestal 1170 pour maintenir le micro-résonateur 1120 suspendu au-dessus du substrat 101. Le piédestal 1170 est approximativement centré sur le centre du micro-résonateur 1120.

La couche intermédiaire subsistant autour de la cavité 105 sert notamment au maintien mécanique du guide d'onde d'injection et extraction 1110, en suspension au-dessus du substrat 101.

La gravure est ici une gravure humide au temps.

Chacune des gravures utilise de préférence un masque de gravure.

Un élément mobile annexe peut, comme le guide d'onde d'injection et extraction, être gravé dans la couche supérieure 103 en silicium.

En variante, l'élément mobile annexe peut être constitué d'un matériau différent de celui des guides d'onde. Il s'agit par exemple d'un nanotube de carbone.

**Revendications**

**1.** Capteur optique (1000 ; 1000' ; 5000) comportant :

- un dispositif optique (100 ; 100' ; 500) comprenant un micro-résonateur à guide d'onde (120 ; 520 ; 720 ; 820 ; 920A ; 920B ; 920C ; 920D ; 1020 ; 1120), agencé pour guider un faisceau lumineux selon un chemin optique en boucle fermée, et un guide d'onde d'injection et extraction (110 ; 1010A ; 1010B ; 1110), ou un guide d'onde d'injection (110A) et un guide d'onde d'extraction (110B), couplé(s) optiquement au micro-résonateur pour l'injection et l'extraction dudit faisceau lumineux;

- un photo-détecteur (150 ; 550), disposé en sortie du guide d'onde d'injection et extraction, respectivement en sortie du guide d'onde d'extraction ; et

- un dispositif d'analyse (160 ; 560), recevant en entrée un signal fourni par le photo-détecteur, agencé pour comparer ce signal avec des données de référence, et pour en déduire une information relative à un déplacement au sein du dispositif optique (100 ; 100' ; 500) ;

le micro-résonateur étant constitué d'une pluralité de guides d'onde élémentaires (121 ; 521 ; 721 ; 821; 921 ; 1121) espacés les uns des autres, et disposés les uns à la suite des autres selon un agencement en forme de boucle.

2. Capteur optique (1000 ; 1000') selon la revendication 1, **caractérisé en ce qu'**il comprend en outre un élément mobile annexe (130), adapté à se déplacer relativement au micro-résonateur de façon à traverser partiellement ou totalement un espace libre (122) entre deux guides d'onde élémentaires voisins.

3. Capteur optique (5000) selon la revendication 1 ou 2, **caractérisé en ce que** les guides d'onde élémentaires (521; 721; 821; 921 ; 1121) du micro-résonateur sont suspendus au-dessus d'un substrat (772 ; 872 ; 101), et autour d'un piédestal (570 ; 770 ; 870 ; 1170).

4. Capteur optique (5000) selon la revendication 3, **caractérisé en ce que** le piédestal (570 ; 770 ; 870 ; 1170) présente une forme de cylindre, la base du cylindre présentant un diamètre (D1) compris entre 0,25 et 0,75 fois le diamètre (D2) du micro-résonateur.

5. Capteur optique (5000) selon la revendication 3 ou 4, **caractérisé en ce que** les guides d'onde élémentaires (521 ; 721 ; 921 ; 1121) du micro-résonateur sont montés solidaires d'une plaque de support (771 ; 971A ; 971B ; 971C ; 971D), elle-même en appui sur le piédestal.

6. Capteur optique selon la revendication 5, **caractérisé en ce que** la plaque de support présente une ou plusieurs tranchées (925), chacune de ces tranchées s'étendant depuis une région périphérique de la plaque de support, située entre deux guides d'onde élémentaires voisins, jusqu'à une région centrale de la plaque de support.

7. Capteur optique selon la revendication 6, **caractérisé en ce que** la plaque de support présente au moins un couple de tranchées (925), chaque couple délimitant sur la plaque de support une zone dite isolée (9711A ; 9711B ; 9711C ; 9711D), recevant un ou plusieurs guides d'onde élémentaires.

8. Capteur optique selon la revendication 7, **caractérisé en ce que** la plaque de support (971A ; 971B) présente un unique couple de tranchées.

9. Capteur optique selon la revendication 7, **caractérisé en ce que** la plaque de support (971C) présente deux couples de tranchées, agencés symétriques l'un de l'autre.

10. Capteur optique selon la revendication 6, **caractérisé en ce que** la plaque de support (971D) présente une pluralité de tranchées délimitant ensemble une pluralité de zones isolées (9711D) symétriques deux à deux.

11. Capteur optique selon la revendication 6, **caractérisé en ce que** la plaque de support comporte une pluralité de tranchées (925) réparties de manière périodique sur la plaque de support, de manière à isoler une pluralité de guides d'onde élémentaires dits mobiles, et **en ce que** le capteur optique comporte en outre des moyens de pilotage, pour piloter le déplacement des guides d'onde élémentaire mobiles de manière à les positionner alternativement :

- dans le plan du micro-résonateur, dans une position dans laquelle les guides d'onde élémentaires du micro-résonateur sont répartis ensemble selon un pas de répartition (P) inférieur à $\frac{\lambda}{2n_{moy\_1}}$, avec $\lambda$ une longueur d'onde de résonance exploitée du micro-résonateur et $n_{moy\_1}$ l'indice de réfraction moyen du micro-résonateur comportant tous les guides d'onde élémentaires ; et
- hors du plan du micro-résonateur, dans une position dans laquelle les guides d'onde élémentaires restant dans le plan du micro-résonateur sont répartis ensemble selon un pas de répartition égal à $\dfrac{\lambda}{2n_{moy\_2}}$, avec $\lambda$ une longueur d'onde de résonance exploitée du micro-résonateur et $n_{moy\_2}$ l'indice de réfraction d'une structure formée par les guides d'onde élémentaires restant dans le plan du micro-résonateur.

12. Capteur optique selon la revendication 3 ou 4, **caractérisé en ce que** les guides d'onde élémentaires (821) sont suspendus autour du piédestal (870), par l'intermédiaire de bras (875, 876) qui s'étendent dans un plan parallèle au plan du micro-résonateur.

13. Capteur optique (1000 ; 1000') selon la revendication 1 ou 2, **caractérisé en ce que** les guides d'onde élémentaires (121) sont en appui sur un substrat (172), sans bras de levier.

14. Capteur optique (1000 ; 1000' ; 5000) selon l'une quelconque des revendications 1 à 13, **caractérisé en ce que** les guides d'onde élémentaires (121 ; 521 ; 721 ; 821 ; 921 ; 1121) du micro-résonateur sont répartis de façon périodique les uns à la suite des autres, selon un pas régulier dit pas de répartition.

15. Capteur optique selon la revendication 14, **caractérisé en ce que** le pas de répartition (P) est inférieur à :

$$\frac{\lambda}{2n_h}$$

avec $\lambda$ une longueur d'onde de résonance du micro-résonateur ; et
$n_h$ l'indice de réfraction moyen des guides d'onde élémentaires.


**Patentansprüche**

1. Optischer Sensor (1000; 1000'; 5000), enthaltend:

   - eine optische Vorrichtung (100; 100'; 500) mit einem Wellenleiter-Mikroresonator (120; 520; 720; 820; 920A; 920B; 920C; 920D; 1020; 1120), der dazu vorgesehen ist, einen Lichtstrahl entlang eines geschlossenen optischen Pfades zu führen, und mit einem Einkopplungs- und Auskopplungswellenleiter (110; 1010A; 1010B; 1110) oder einem Einkopplungswellenleiter (110A) und einem Auskopplungswellenleiter (110B), die zur Einkopplung und Auskopplung des Lichtstrahls optisch mit dem Mikroresonator gekoppelt ist/sind;
   - einen Photodetektor (150; 550), der am Ausgang des Einkopplungs- und Auskopplungswellenleiters bzw. am Ausgang des Auskopplungswellenleiters angeordnet ist; und
   - eine Analysevorrichtung (160; 560), die am Eingang ein Signal empfängt, das von dem Photodetektor bereitgestellt wird, und die dazu vorgesehen ist, dieses Signal mit Bezugsdaten zu vergleichen und daraus eine Information über eine Verschiebung innerhalb der optischen Vorrichtung (100; 100'; 500) abzuleiten;

   wobei der Mikroresonator aus einer Mehrzahl von elementaren Wellenleitern (121; 521; 721; 821; 921; 1121) besteht, die voneinander beabstandet sind und in Schleifenanordnung nacheinander angeordnet sind.

2. Optischer Sensor (1000; 1000') nach Anspruch 1,
   **dadurch gekennzeichnet, dass** er ferner ein bewegliches Zusatzelement (130) enthält, das dazu ausgelegt ist, sich relativ zum Mikroresonator so zu verschieben, dass es einen Freiraum (122) zwischen zwei benachbarten, elementaren Wellenleitern teilweise oder vollständig durchquert.

3. Optischer Sensor (5000) nach Anspruch 1 oder 2,
   **dadurch gekennzeichnet, dass** die elementaren Wellenleiter (521; 721; 821; 921; 1121) des Mikroresonators über einem Substrat (772; 872; 101) und um einen Sockel (570; 770; 870; 1170) herum aufgehängt sind.

4. Optischer Sensor (5000) nach Anspruch 3,
   **dadurch gekennzeichnet, dass** der Sockel (570; 770; 870; 1170) eine Zylinderform aufweist, wobei die Grundfläche des Zylinders einen Durchmesser (D1) zwischen dem 0,25- und 0,75-fachen des Durchmessers (D2) des Mikroresonators liegt.

5. Optischer Sensor (5000) nach Anspruch 3 oder 4,
**dadurch gekennzeichnet, dass** die elementaren Wellenleiter (521; 721; 921; 1121) des Mikroresonators fest an einer Tragplatte (771; 971A; 971B; 971C; 971D) angebracht sind, die sich ihrerseits an dem Sockel abstützt.

6. Optischer Sensor (5000) nach Anspruch 5,
**dadurch gekennzeichnet, dass** die Tragplatte einen oder mehrere Gräben (925) aufweist, wobei jeder dieser Gräben sich von einem zwischen zwei benachbarten elementaren Wellenleitern liegenden Umfangsbereich der Tragplatte zu einem zentralen Bereich der Tragplatte erstreckt.

7. Optischer Sensor nach Anspruch 6,
**dadurch gekennzeichnet, dass** die Tragplatte zumindest ein Paar von Gräben (925) aufweist, wobei jedes Paar an der Tragplatte einen isolierten Bereich (9711A; 9711B; 9711C; 9711D) begrenzt, der einen oder mehrere elementare Wellenleiter aufnimmt.

8. Optischer Sensor nach Anspruch 7,
**dadurch gekennzeichnet, dass** die Tragplatte (971A; 971B) ein einzelnes Paar von Gräben aufweist.

9. Optischer Sensor nach Anspruch 7,
**dadurch gekennzeichnet, dass** die Tragplatte (971C) zwei Paare von Gräben aufweist, die symmetrisch zueinander angeordnet sind.

10. Optischer Sensor nach Anspruch 6,
**dadurch gekennzeichnet, dass** die Tragplatte (971D) eine Mehrzahl von Gräben aufweist, die zusammen eine Mehrzahl von isolierten Bereichen (9711D) begrenzen, die paarweise symmetrisch sind.

11. Optischer Sensor nach Anspruch 6,
**dadurch gekennzeichnet, dass** die Tragplatte eine Mehrzahl von Gräben (925) aufweist, die periodisch über die Tragplatte verteilt sind, so dass sie eine Mehrzahl von beweglichen, elementaren Wellenleitern isolieren, und dass der optische Sensor ferner Steuerungsmittel enthält, um die Verschiebung der beweglichen, elementaren Wellenleitern so zu steuern, dass sie wechselweise positioniert werden:

- in der Ebene des Mikroresonators in einer Position, in welcher die elementaren Wellenleiter des Mikroresonators zusammen gemäß einem Verteilungsschritt (P) verteilt sind, der kleiner als $\frac{\lambda}{2n_{moy\_1}}$ ist, worin $\lambda$ eine genutzte Resonanzwellenlänge des Mikroresonators ist und $n_{moy\_1}$ der mittlere Brechungsindex des Mikroresonators mit sämtlichen elementaren Wellenleitern ist; und
- außerhalb der Ebene des Mikroresonators in einer Position, in welcher die in der Ebene des Mikroresonators verbleibenden elementaren Wellenleiter zusammen gemäß einem Verteilungsschritt verteilt sind, der gleich $\frac{\lambda}{2n_{moy\_2}}$ ist, worin $\lambda$ eine genutzte Resonanzwellenlänge des Mikroresonators ist und $n_{moy\_2}$ der Brechungsindex einer aus den in der Ebene des Mikroresonators verbleibenden elementaren Wellenleitern gebildeten Struktur ist.

12. Optischer Sensor nach Anspruch 3 oder 4,
**dadurch gekennzeichnet, dass** die elementaren Wellenleiter (821) um den Sockel (870) herum über Arme (875, 876) aufgehängt sind, die sich in einer Ebene parallel zur Ebene des Mikroresonators erstrecken.

13. Optischer Sensor (1000; 1000') nach Anspruch 1 oder 2,
**dadurch gekennzeichnet, dass** die elementaren Wellenleiter (121) ohne Hebelarm in Abstützung an einem Substrat (172) liegen.

14. Optischer Sensor (1000; 1000'; 5000) nach einem der Ansprüche 1 bis 13,
**dadurch gekennzeichnet, dass** die elementaren Wellenleiter (121; 521; 721; 821; 921; 1121) des Mikroresonators periodisch nacheinander gemäß einem gleichmäßigen Schritt, Verteilungsschritt genannt, verteilt sind.

**15.** Optischer Sensor nach Anspruch 14,
**dadurch gekennzeichnet, dass** der Verteilungsschritt (P) kleiner ist als

$$\frac{\lambda}{2n_h}$$

worin $\lambda$ eine Resonanzwellenlänge des Mikroresonators ist; und
$n_h$ der mittlere Brechungsindex der elementaren Wellenleiter ist.

**Claims**

**1.** An optical sensor (1000; 1000'; 5000) including:

- an optical device (100; 100'; 500) comprising a waveguide micro-resonator (120; 520; 720; 820; 920A; 920B; 920C; 920D; 1020; 1120), arranged to guide a light beam along a closed loop optical path, and an injection and extraction waveguide (110; 1010A; 1010B; 1110), or an injection waveguide (110A) and an extraction waveguide (110B), optically coupled with the micro-resonator for injecting and extracting said light beam;
- a photo-detector (150; 550), disposed at the output of the injection and extraction waveguide, respectively at the output of the extraction waveguide; and
- an analysis device (160; 560), receiving as an input a signal provided by the photo-detector, arranged to compare this signal with reference data, and to deduce therefrom a piece of information relating to a movement within the optical device (100; 100'; 500);

the micro-resonator consisting of a plurality of unit waveguides (121; 521; 721; 821; 921; 1121) spaced apart from each other, and disposed one after the other according to a loop-shaped arrangement.

**2.** The optical sensor (1000; 1000') according to claim 1, **characterised in that** it further comprises a subsidiary movable element (130), adapted to move relative to the micro-resonator so as to partially or totally pass through a free space (122) between two neighbouring unit waveguides.

**3.** The optical sensor (5000) according to claim 1 or 2, **characterised in that** the unit waveguides (521; 721; 821; 921; 1121) of the micro-resonator are suspended above a substrate (772; 872; 101), and about a pedestal (570; 770; 870; 1170).

**4.** The optical sensor (5000) according to claim 3, **characterised in that** the pedestal (570; 770; 870; 1170) has a cylinder shape, the base of the cylinder having a diameter (D1) between 0.25 and 0.75 times the diameter (D2) of the micro-resonator.

**5.** The optical sensor (5000) according to claim 3 or 4, **characterised in that** the unit waveguides (521; 721; 921; 1121) of the micro-resonator are mounted integral with a support plate (771; 971A; 971B; 971C; 971D), in turn bearing against the pedestal.

**6.** The optical sensor according to claim 5, **characterised in that** the support plate has one or more trenches (925), each of these trenches extending from a peripheral region of the support plate, located between two neighbouring unit waveguides, to a central region of the support plate.

**7.** The optical sensor according to claim 6, **characterised in that** the support plate has at least one pair of trenches (925), each pair delimiting on the support plate a so-called insulated zone (9711A; 9711B; 9711C; 9711D), receiving one or more unit waveguides.

**8.** The optical sensor according to claim 7, **characterised in that** the support plate (971A; 971B) has a single pair of trenches.

**9.** The optical sensor according to claim 7, **characterised in that** the support plate (971C) has two pairs of trenches, arranged symmetrical to each other.

**10.** The optical sensor according to claim 6, **characterised in that** the support plate (971D) has a plurality of trenches together delimiting a plurality of insulated zones (9711D) symmetrical two by two.

**11.** The optical sensor according to claim 6, **characterised in that** the support plate includes a plurality of trenches (925) periodically distributed on the support plate, so as to insulate a plurality of so-called movable unit waveguides, and **in that** the optical sensor further includes drive means, to drive the movement of the movable unit waveguides so as to position them alternately:

- in the plane of the micro-resonator, in a position in which the unit waveguides of the micro-resonator are distributed together according to a distribution pitch (P) lower than $\frac{\lambda}{2n_{moy\_1}}$, with $\lambda$ being an operated resonance wavelength of the micro-resonator and $\eta_{moy-1}$ being the mean refractive index of the micro-resonator including all the unit waveguides; and

- out of the plane of the micro-resonator, in a position in which the unit waveguides remaining in the plane of the micro-resonator are distributed together according to a distribution pitch equal to $\frac{\lambda}{2n_{moy\_2}}$, with $\lambda$ being an operated resonance wavelength of the micro-resonator and $\eta_{moy-2}$ being the refractive index of a structure formed by the unit waveguides remaining in the plane of the micro-resonator.

**12.** The optical sensor according to claim 3 or 4, **characterised in that** the unit waveguides (821) are suspended about the pedestal (870), through arms (875, 876) which extend in a plane parallel to the plane of the micro-resonator.

**13.** The optical sensor (1000; 1000') according to claim 1 or 2, **characterised in that** the unit waveguides (121) bear against a substrate (172), without a lever arm.

**14.** The optical sensor (1000; 1000'; 5000) according to any of claims 1 to 13, **characterised in that** the unit waveguides (121; 521; 721; 821; 921; 1121) of the micro-resonator are periodically distributed one after the other, according to a regular pitch called a distribution pitch.

**15.** The optical sensor according to claim 14, **characterised in that** the distribution pitch (*P*) is lower than:

$$\frac{\lambda}{2n_h}$$

with $\lambda$ a resonance wavelength of the micro-resonator; and
$\eta_h$ the mean refractive index of the unit waveguides.

FIG.1A

FIG.1B

FIG.2

FIG.3

FIG.4

FIG.5

FIG.6A

FIG.6B

FIG.7A

FIG.7B

FIG.8A

FIG.8B

**FIG.9A**

**FIG.9B**

**FIG.9C**

**FIG.9D**

**FIG.10A**

**FIG.10B**

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20170146738 A
- US 20090220184 A

- FR 1657222

**Littérature non-brevet citée dans la description**

- **V.T.K. SAUER.** *Nanotechnology,* 2014, vol. 25
- A Monolithic Radiation-Pressure Driven, Low Phase Noise Silicon Nitride Opto-Mechanical Oscillator. **SIDDHARTH TALLUR.** arXiv.org. Cornell University Library, 15 Septembre 2011

- **SIDDHARTH TALLUR.** A monolithic radiation-pressure driven, low phase noise silicon nitride opto-mechanical oscillator. *Optics Express,* vol. 19 (24